# NEW EUROPEAN PATENT SPECIFICATION

(11) **EP 2 617 088 B2**
(45) Date of publication and mention of the opposition decision: **02.12.2020**
(45) Mention of the grant of the patent: 02.08.2017
(21) Application number: 11826013.2
(22) Date of filing: 16.09.2011
(51) Int. Cl.: H01M 6/14, C08L 1/08, C08L 97/02, C08L 3/04

(54) **ORGANIC ACID CARBOHYDRATE BINDERS AND MATERIALS MADE THEREWITH**
ORGANISCHE UND SAURE KOHLENHYDRATBINDEMITTEL UND MATERIALIEN DARAUS
LIANTS À BASE DE GLUCIDE ET D'ACIDE ORGANIQUE ET MATÉRIAUX LES UTILISANT

(30) Priority: 17.09.2010 US 383762 P
(43) Date of publication of application: 24.07.2013
(73) Proprietor: Knauf Insulation GmbH, Shelbyville, IN 46176 (US)
(72) Inventor: MUELLER, Gert, R.J., New Palestine, IN 46163 (US)
(74) Representative: ARC-IP
(86) International application number: PCT/US2011/051914
(87) International publication number: WO 2012/037451

(56) References cited:
- WO-A1-2008/091256
- WO-A1-2009/019235
- US-A- 5 470 843
- US-A1- 2007 027 283
- US-A1- 2010 210 595

## Description

### TECHNICAL FIELD

This disclosure relates to a binder formulation and materials made therewith comprising a carbohydrate-based binder and a method for preparing the same. In particular, a binder comprising the reaction products of carbohydrates polymerized in the presence of an organic acid and materials made therewith is described.

### BACKGROUND AND SUMMARY

Binders are useful in fabricating articles because they are capable of consolidating non- or loosely-assembled matter. For example, binders enable two or more surfaces to become united. In particular, binders may be used to produce products comprising consolidated fibers. Thermosetting binders may be characterized by being transformed into insoluble and infusible materials by means of either heat or catalytic action. Examples of a thermosetting binder include a variety of phenol-aldehyde, urea-aldehyde, melamine-aldehyde, and other condensation-polymerization materials like furan and polyurethane resins. Binder compositions containing phenol-aldehyde, resorcinol-aldehyde, phenol/aldehyde/urea, phenol/melamine/aldehyde, and the like are used for the bonding of fibers, textiles, plastics, rubbers, and many other materials.

The mineral wool and fiber board industries have historically used a phenol-formaldehyde binder to bind fibers. Phenol-formaldehyde type binders provide suitable properties to the final products; however, environmental considerations have motivated the development of alternative binders. One such alternative binder is a carbohydrate based binder derived from reacting a carbohydrate and a multiprotic acid, for example, U.S. Published Application No. 2007/0027283 and Published PCT Application WO2009/019235. Another alternative binder is the esterification products of reacting a polycarboxylic acid and a polyol, for example, U.S. Published Application No. 2005/0202224. Because these binders do not utilize formaldehyde as a reagent, they have been collectively referred to as formaldehyde-free binders.

One area of current development is to find a replacement for the phenol-formaldehyde type binders across the entire range of products in the building and automotive sector (e.g. fiberglass insulation, particle boards, office panels, and acoustical sound insulation). In particular, the previously developed formaldehyde-free binders may not possess all of the desired properties for all the products in this sector. For example, acrylic acid and poly(vinyl alcohol) based binders have shown promising performance characteristics. However, these are relatively more expensive than phenol-formaldehyde binders, are derived essentially from petroleum-based resources, and have a tendency to exhibit lower reaction rates compared to the phenol-formaldehyde based binder compositions (requiring either prolonged cure times or increased cure temperatures). A carbohydrate-based binder that includes an amine base and a polycarboxylic acid has been developed with great success. However, one potential disadvantage is that relatively high concentrations of the polycarboxylic acid are typically used to achieve a fully thermoset polymer after heat treatment. The relatively high polycarboxylic acid concentrations are achievable only with relatively high reagent consumption which has the effect of increasing corrosion rates to the carbon steel manufacturing equipment. Furthermore, the amount of amine base used to neutralize the polycarboxylic acid depends on the concentration of the polycarboxylic acid. Carbohydrate-based binders including a sulfuric acid and an amine base have also been successfully demonstrated. One potential disadvantage of sulfuric acids is that they are known to be highly corrosive and oxidizing under the thermosetting curing conditions. Similarly, phosphoric acids have been used and are known to be less corrosive than sulfuric acid. However, a significant corrosion impact to metals is still observed.

The invention is defined in the appended claims. Any disclosure lying outside the scope of said claims is only intended for illustrative as well as comparative purposes. According to the present disclosure, a carbohydrate-based binder is described. The binder composition has properties that make it useful for a variety of applications; particularly, the binder may be used to bind loosely assembled matter such as fibers. The carbohydrate-based binder includes environmentally responsible reagents and provides advantages during manufacturing such as being less corrosive and less oxidizing than known binder compositions.

### BRIEF DESCRIPTION OF THE DRAWINGS

Fig 1 shows a schematic of a Maillard reaction, which culminates in the production of melanoidins.
Fig 2 shows the dry and weathered tensile strengths for Example and Comparative Example binder compositions.

### DETAILED DESCRIPTION

The present disclosure relates to a binder composition having unexpected utility in consolidating non- or loosely-assembled matter. The binder composition represents an unexpected advancement in the current state of technology in the area of binder compositions. Specifically, the binder offers improvements in performance and provides for more simplified and advantageous manufacturing methodologies, while maintaining the environmentally sound advantages that are characteristic of a carbohydrate based binder system.

As used herein, the term binder solution is the solution of chemicals which can be substantially dehydrated to form an uncured binder. The binder or binder composition may be cured, uncured, or partially cured. The composition of the uncured binder is referred to as an uncured binder composition. An uncured binder is a substantially dehydrated mixture of chemicals which can be cured to form a cured binder. Substantially dehydrated means that the solvent (typically water or a mixture thereof) used to make the binder solution is vaporized to the extent that the viscosity of the remaining material (comprising the binder reactants and solvent) is sufficiently high to create cohesion between the loosely assembled matter; thus, the remaining material is an uncured binder. In one embodiment, the solvent is less than 65% of the total weight of the remaining material. In another embodiment, a substantially dehydrated binder has a moisture content between about 5% and about 65% water by weight of total binder. In another embodiment, the solvent may be less than 50% of the total weight of the remaining material. In yet another embodiment, the solvent may be less than 35% of the total weight of the remaining material. In another embodiment, a substantially dehydrated binder has between about 10% and about 35% water by weight of total binder. In another embodiment, the solvent may comprise less than about 20% of the total weight of the remaining material. As used herein, the term organic acid refers to an organic compound which contains an acid function other than a carboxylic acid, for example a phosponic acid or a sulfonic acid.

In illustrative embodiments, an uncured binder may be colorless, white, off white, ochre or yellow to brownish sticky substance that is, at least partially, water soluble. As used herein, the term cured binder describes the polymeric product of curing the uncured binder composition. The cured binder may have a characteristic brown to black color. While described as brown or black, another characteristic is that the binder tends to absorb light over a broad range of wavelengths. In particular, there may be higher absorbance between 400 and 500 nm, for example at approximately 420 nm. As the polymer is extensively cross-linked, the cured binder is substantially insoluble. For example, the binder is predominantly insoluble in water. As described herein, the uncured binder provides sufficient binding capacity to consolidate fibers; however, the cured binder imparts the robust, long-lasting durability and physical properties commonly associated with cross-linked polymers.

In illustrative embodiments, the binder solutions described herein can be applied to glass fibers (e.g., sprayed onto the mat or sprayed onto the fibers as they enter the forming region), during production of fiberglass insulation products. Once the binder solution is in contact with the glass fibers the residual heat from the glass fibers (note that the glass fibers are made from molten glass and thus contain residual heat) and the flow of air through and/or around the product will cause a portion of the water to evaporate from the binder solution. Removing the water leaves the remaining components of the binder on the fibers as a coating of viscous or semi-viscous high-solids mixture. This coating of viscous or semi-viscous high-solids mixture functions as a binder. At this point, the mat has not been cured. In other words, the uncured binder functions to bind the glass fibers in the mat.

Furthermore, it should be understood that the above described uncured binders can be cured. For example, the process of manufacturing a cured insulation product may include a subsequent step in which heat is applied so as to cause a chemical reaction in the uncured binder composition. For example, in the case of making fiberglass insulation products, after the binder solution has been applied to the fibers and dehydrated, the uncured insulation product may be transferred to a curing oven. In the curing oven the uncured insulation product is heated (*e.g.*, from about 300 °F to about 600 °F [from about 150 °C to about 320 °C]), causing the binder to cure. The cured binder is a formaldehyde-free, water-resistant binder that binds the glass fibers of the insulation product together. Note that the drying and thermal curing may occur either sequentially, simultaneously, contemporaneously, or concurrently.

In illustrative embodiments, an uncured fiber product comprises about 3% to about 40% of dry binder solids (total uncured solids by weight). In one embodiment, the uncured fiber product comprises about 5% to about 25% of dry binder solids. In another embodiment, the uncured fiber product comprises about 50% to about 97% fibers by weight.

As mentioned herein with respect to a binder on glass fibers, a cured binder is the product of curing binder reactants. The term cured indicates that the binder has been exposed to conditions so as to initiate a chemical change. Examples of these chemical changes include, but are not limited to, (i) covalent bonding, (ii) hydrogen bonding of binder components, and (iii) chemically cross-linking the polymers and/or oligomers in the binder. These changes may increase the binder's durability and solvent resistance as compared to the uncured binder. Curing a binder may result in the formation of a thermoset material. In addition, a cured binder may result in an increase in adhesion between the matter in a collection as compared to an uncured binder. Curing can be initiated by, for example, heat, microwave radiation, and/or conditions that initiate one or more of the chemical changes mentioned above.

In a situation where the chemical change in the binder results in the release of water, e.g., polymerization and cross-linking, a cure can be determined by the amount of water released above that which would occur from drying alone. The techniques used to measure the amount of water released during drying as compared to when a binder is cured, are well known in the art.

While not limited to a particular theory, the cured binder composition comprises a mixture of high molecular weight polymers. The high molecular weight polymers may be characterized as being highly cross-linked. Furthermore, the high molecular weight polymers may be characterized as being brown, complex, furan ring-containing and nitrogen-containing polymers. High molecular weight, as used herein, includes those polymers having a molecular weight in excess of 100,000 Daltons. Being comprised of highly cross-linked polymeric chains, the molecular weight of the high molecular weight polymers described herein approaches infinity. Accordingly, the molecular weight of the high molecular weight polymers may be a function of the mass and physical dimensions of the polymer being analyzed. For example, a unitary sample of melanoidins having a mass of 3 grams may be presumed to comprise a single polymeric molecule due to the extensive cross-linking. Accordingly, the molecular weight of the polymer would be approximately 1 x 10²⁴ grams per mole (being the product of the sample mass and Avogadro's number). As used herein, a high molecular weight polymer includes polymers with a molecular weight on the order of between about 1 x 10⁵ and about 1 x 10²⁴ grams per mole.

While not be limited to a particular theory, it is understood that high molecular weight polymers vary in structure according to the reactants and conditions of preparation. It is also known that high molecular weight polymers possess a carbon to nitrogen ratio which increases with temperature and time of heating. Furthermore, high molecular weight polymers possess saturated, unsaturated and aromatic character. In one embodiment, the high molecular weight polymers possessed a degree of unsaturation and aromaticity that increased with temperature (cure temperature) and time of heating (cure time). The high molecular weight polymers also contained the C-1 of those sugars incorporated as reactants in a variety of structures within the polymer. The high molecular weight polymers may also contain carbonyl, carboxyl, amine, amide, pyrrole, indole, azomethine, ester, anhydride, ether, methyl and/or hydroxyl groups. Depending on the complexity of the structure, infrared spectroscopy may be useful in the identification of one or more of these functional groups. While not so classified here, one of ordinary skill would appreciate that the binder may be classifiable according to the existence of a particular bond present such as a polyester, polyether, polyamide, etc.

Another manner in which the binder is characterizable is through analysis of the gaseous compounds produced during pyrolysis of the cured binder. Gas pyrolysis of a cured binder within the scope of the present disclosure may yield approximately 0.5 to about 15% (by relative peak area) of one or more of the following compounds: 2-cyclopenten-1-one, 2,5-dimethyl-furan, furan, 3-methyl-2,5-furandione, phenol, 2,3-dimethyl-2-cyclopenten-1-one, 2-methyl phenol, 4-methyl phenol, 2,4-dimethyl-phenol, dimethylphthalate, octadecanoic acid, or erucylamide. Another manner in which the binder may be identified is whether a solution containing the binder (or an extract solution) is capable of reducing Benedict's reagent. In one embodiment, a solution in contact with the binder or an aqueous extract thereof reduces Benedict's reagent.

One aspect of the present disclosure is that the binders described herein are environmentally friendly. Parallel to advancing government regulation, the present disclosure describes a binder that may be made formaldehyde-free. Additionally, the chemistry described herein is essentially free of formaldehyde and phenol. In this sense, neither formaldehyde nor phenol is used as a reagent within the scope of the present disclosure. While both may be added to obtain a binder with potentially useful properties, one aspect of the present disclosure is a binder that can be made free from both of these reactants. In one embodiment, the binder described herein may be essentially free from sulfates, phosphates, and/or carboxylic acids. Accordingly, in one embodiment the binder may be characterized as phosphate-free, sulfate-free and/or carboxylic acid-free.

Another environmentally friendly aspect of the present disclosure is that the primary reactants of the binder are carbohydrates. Carbohydrates are considered a renewable resource. However, the current state of the art primarily uses petroleum-derived reactants for the manufacture of binder compositions. To establish the extent to which a certain product is manufactured to include renewable carbon sources, a biobased carbon content analysis may be performed using an appropriate analytical technique, for example radiocarbon analysis. Exemplary procedures are set forth in ASTM-D 6866-10. In illustrative embodiments, the binder has a biobased carbon content of between about 50% and about 98% according to ASTM-D 6866-10. In another embodiment, the binder has a biobased carbon content of between about 60% and about 95%.

In addition to the environmental benefits, the present binder composition and materials made therewith can be made having performance characteristics equivalent or exceeding those of comparable binder systems, for example, phenol-formaldehyde binders. In one aspect, a binder according to the present disclosure provides articles made therewith sufficient tensile strength to allow for die-cutting, fabrication, lamination, and installation in OEM applications. In one aspect, a binder according to the present disclosure has water hold-up (weatherability) comparable to that of a phenol-formaldehyde binder. In another aspect, a binder according to the present disclosure has water hold-up (weatherability) that exceeds the performance of other carbohydrate-based binder formulations. Other performance characteristics that may be relevant for a particular application include product emissions, density, loss on ignition, thickness recovery, dust, tensile strength, parting strength, durability of parting strength, bond strength, water absorption, hot surface performance, corrosivity on steel, flexural rigidity, stiffness-rigidity, compressive resistance, conditioned compressive resistance, compressive modulus, conditioned compressive modulus, and smoke development on ignition. One aspect of the present disclosure is that the extract of the cured binder is essentially pH neutral, for example between a pH of 5 and 10. In other embodiments, the extract of the cured binder is between a pH of 6 and 8. Another aspect of the present disclosure is that the present binder enables the manufacture of products having comparable relevant performance characteristics to phenol-formaldehyde binder compositions and other carbohydrate-based binders.

According to one aspect, the reactants that react to form a binder are sufficiently slow to react such that a one step/one pot binder system can be used. According to this aspect, the reactant compounds are sufficiently slow to react that they can be added to a single reactant solution and stored for a reasonable amount of time during which they can be applied to a product using one distribution system. This contrasts with those binder systems which react at low temperatures resulting in insoluble reaction products within binder solution delivery systems. As used here, a reasonable amount of time for storage without substantial (>5%) polymeric precipitation is two weeks.

In illustrative embodiments, the binder composition includes a conditioning acid or an acid salt to increase the shelf life of the uncured binder or binder solution. While this conditioning acid is not a reactant or a catalyst, it may be included to slow or inhibit the binder reactants from forming the binder while the binder solution or uncured binder is being maintained under storage conditions. For example, the conditioning acid may be a volatile acid or acid salt may be included in the binder solution or uncured binder that slows or inhibits the curing reaction at ambient conditions. However, the acid may be removed by heating the binder solution or uncured binder so that the acid is volatilized and the pH of the binder solution or uncured binder increases. In one embodiment, the binder composition includes a shelf-life extending acid. In another embodiment, the binder composition includes a mole ratio of conditioning acid to carbohydrate of about 1:100 to about 1:10.

In the manufacture of insulation products, the heat released by the exothermic curing reaction may result in self-heating of the product. Self-heating is typically not problematic so long as the heat dissipates from the product. However, if the heat increases the temperature of the product to the point where oxidative processes commence, the self-heating may cause significant damage to the product. For example, flameless combustion or oxidation may occur when the temperature of the insulation product exceeds about 425 °F (210 °C). At these temperatures, the exothermic combustion or oxidation processes promote further self-heating and the binder may be destroyed. Furthermore, the temperature may increase to a level in which fusing or devitrification of the glass fibers is possible. Not only does this damage the structure and value of the insulation product, it may also create a fire hazard. On aspect of the present disclosure is that the polymerization described herein includes a relatively small exotherm so that the self-heating does not result in damaged product. Another aspect of the present disclosure is that a temperature control additive can be added to the binder composition to control the exotherm.

Another aspect of the present disclosure is that the binder system is essentially non-corrosive with or without the addition of corrosion inhibitors. In illustrative embodiments, a mixture of the organic acid and carboxylic or inorganic acids may be used to further reduce corrosivity and/or cost. In one embodiment, about 0.5% to about 5% of phosphoric acid (or its salts) is added to the binder composition to further reduce the corrosivity. In another embodiment, the binder may be manufactured under entirely alkaline conditions. This aspect reduces the wear and maintenance requirements of the manufacturing equipment and enhances worker safety.

In illustrative embodiments, a binder comprises a polymeric product of a carbohydrate reactant, an amine base, and an organic acid. As used herein, the term carbohydrate reactant refers to a monosaccharide, a disaccharide, a polysaccharide, or a reaction product thereof. In the present invention, the carbohydrate reactant is a reducing sugar. As used herein, reducing sugar indicates one or more sugars that contain aldehyde groups, or that can isomerize, i.e., tautomerize, to contain aldehyde groups, which groups may be oxidized with, for example, Cu⁺² to afford carboxylic acids. It is also appreciated that any such carbohydrate reactant may be optionally substituted, such as with hydroxy, halo, alkyl, alkoxy, and the like. It is further appreciated that in any such carbohydrate reactant, one or more chiral centers are present, and that both possible optical isomers at each chiral center are contemplated to be included in the disclosure described herein. Further, it is also to be understood that various mixtures, including racemic mixtures, or other diastereomeric mixtures of the various optical isomers of any such carbohydrate reactant, as well as various geometric isomers thereof, may be used in one or more embodiments described herein. While non-reducing sugars, for instance sucrose, may not be preferable, they may none-the-less be useful within the scope of the present disclosure by in-situ conversion to a reducing sugar (i.e. conversion of sucrose to invert sugar is a method known in the art). Further, it is also understood that a monosaccharide, a disaccharide, or polysaccharide may be partially reacted with a precursor to form a carbohydrate reaction product.

In one aspect, any carbohydrate reactant should be sufficiently nonvolatile to maximize its ability to remain available for reaction with the amine base and the organic acid. The carbohydrate reactant may be a monosaccharide in its aldose or ketose form, including a triose, a tetrose, a pentose, a hexose, or a heptose; or a polysaccharide; or combinations thereof. For example, when a triose serves as the carbohydrate reactant, or is used in combination with other reducing sugars and/or a polysaccharide, an aldotriose sugar or a ketotriose sugar may be utilized, such as glyceraldehyde and dihydroxyacetone, respectively. When a tetrose serves as the carbohydrate reactant, or is used in combination with other reducing sugars and/or a polysaccharide, aldotetrose sugars, such as erythrose and threose; and ketotetrose sugars, such as erythrulose, may be utilized. When a pentose serves as the carbohydrate reactant, or is used in combination with other reducing sugars and/or a polysaccharide, aldopentose sugars, such as ribose, arabinose, xylose, and lyxose; and ketopentose sugars, such as ribulose, arabulose, xylulose, and lyxulose, may be utilized. When a hexose serves as the carbohydrate reactant, or is used in combination with other reducing sugars and/or a polysaccharide, aldohexose sugars, such as glucose (i.e., dextrose), mannose, galactose, allose, altrose, talose, gulose, and idose; and ketohexose sugars, such as fructose, psicose, sorbose and tagatose, may be utilized. When a heptose serves as the carbohydrate reactant, or is used in combination with other reducing sugars and/or a polysaccharide, a ketoheptose sugar such as sedoheptulose may be utilized. Other stereoisomers of such carbohydrate reactants not known to occur naturally are also contemplated to be useful in preparing the binder compositions as described herein. In one embodiment, the carbohydrate reactant is high fructose corn syrup. In another embodiment, the carbohydrate reactant is molasses.

In illustrative embodiments, the carbohydrate reactant is a polysaccharide. In one embodiment, the carbohydrate reactant is a polysaccharide with a low degree of polymerization. In one embodiment, the polysaccharide is molasses, starch, cellulose hydrolysates, or mixtures thereof. In one embodiment, the carbohydrate reactant is a starch hydrolysate, a maltodextrin, or a mixture thereof. While carbohydrates of higher degrees of polymerization may not be preferable, they may none-the-less be useful within the scope of the present disclosure by in-situ depolymerization (i.e. depolymerization through ammoniation at elevated temperatures is a method known in the art). In one embodiment, the carbohydrate reactant is polysaccharide with a degree of polymerization between 3 and 10. In another embodiment, the carbohydrate reactant is polysaccharide with a degree of polymerization between 3 and 5.

Furthermore, the carbohydrate reactant may be used in combination with a non-carbohydrate polyhydroxy reactant. Examples of non-carbohydrate polyhydroxy reactants which can be used in combination with the carbohydrate reactant include, but are not limited to, trimethylolpropane, glycerol, pentaerythritol, polyvinyl alcohol, partially hydrolyzed polyvinyl acetate, fully hydrolyzed polyvinyl acetate, and mixtures thereof. In one aspect, the non-carbohydrate polyhydroxy reactant is sufficiently nonvolatile to maximize its ability to remain available for reaction with a monomeric or polymeric polyamine. It is appreciated that the hydrophobicity of the non-carbohydrate polyhydroxy reactant may be a factor in determining the physical properties of a binder prepared as described herein.

In illustrative embodiments, a binder comprises a polymeric product of a carbohydrate reactant, an amine base, and an organic acid, wherein the organic acid is a sulfonic acid, a phosphonic acid, or a derivative thereof. As used herein, the term "sulfonic acid or a derivative thereof" includes organic compounds bearing the group -SO₃H and salts thereof, and esters and amides thereof. As used herein, the term "phosphonic acid or a derivative thereof" includes organic compounds bearing the group -PO₃H₂ and salts thereof, and esters and amides thereof. In one embodiment of a binder comprising a polymeric product of a carbohydrate reactant, an amine base, and an organic acid, the organic acid has the formula R-Q(=O)ₘ(-OH)ₙ wherein Q is phosphorus (P), m is 1, and n is 2 or Q is sulfur (S), m is 2, and n is 1, and R is alkyl, alkenyl, alkynyl, cycloalkyl, cycloalkenyl, heteroalkyl, heteroalkenyl, cycloheteroalkyl, cycloheteroalkenyl, aryl (carbaryl+heteroaryl), or arylalkyl, each of which is optionally substituted. In one embodiment of the above R is alkyl, cycloalkyl, heteroalkyl, cycloheteroalkyl, alkenyl, cycloalkenyl, or aryl each of which is optionally substituted.

In illustrative embodiments, R is selected from the group consisting of phenyl, benzyl, a tolyl, a xylyl, and a naphthalenyl, each of which is optionally substituted. In the present invention, R is 4-methylphenyl (para-tolyl). In another embodiment, R is selected from the group consisting of 2-aminophenyl, 3-aminophenyl, 2-methylphenyl, 3-methylphenyl, 2,3-dimethylphenyl, and 2,4-dimethylphenyl. In yet another embodiment, R is an alkyl selected from the group consisting of C₁-C₂₄, each of which is optionally substituted. In one embodiment, R is an alkyl selected from the group consisting of C₁-C₈, each of which is optionally substituted. In another embodiment, R is selected from the group consisting of methyl, ethyl, 2-amino-ethyl, piperidinyl, and trifluoromethyl. In another embodiment, R is selected from the group consisting of 2-sulfophenyl, 3-sulfophenyl, sulfomethyl, 2-phosphonophenyl, 3-phosphonophenyl, and phosphonomethyl.

For any of the above descriptions of a binder, in one embodiment the carbohydrate reactant is a monosaccharide or a disaccharide. For any of the above descriptions of a binder, in one embodiment the carbohydrate reactant is a disaccharide selected from the group consisting of sucrose, lactose, lactulose, maltose, trehalose, and cellobiose. For any of the above descriptions of a binder, in one embodiment the carbohydrate reactant is a monosaccharide in its aldose or ketose form. For any of the above descriptions of a binder, in the present invention the carbohydrate reactant is a reducing sugar. For any of the above descriptions of a binder, in one embodiment the carbohydrate reactant is selected from the group consisting of dextrose, xylose, fructose, dihydroxyacetone, and mixtures thereof. For any of the above descriptions of a binder, in one embodiment the carbohydrate reactant is a polysaccharide. For any of the above descriptions of a binder, in one embodiment the carbohydrate reactant is polysaccharide with a degree of polymerization between 3 and 10. For any of the above descriptions of a binder, in one embodiment the carbohydrate reactant is polysaccharide with a degree of polymerization between 3 and 5. For any of the above descriptions of a binder, in one embodiment the carbohydrate reactant is a starch, cellulose, hydrolysates thereof, or molasses. For any of the above descriptions of a binder, in the present invention the mole ratio of the carbohydrate reactant to the acid is in the range of about 2:1 to about 30:1. For any of the above descriptions of a binder, in one embodiment a mole ratio of the carbohydrate reactant to the organic acid is in the range of about 3:1 to about 10:1.

For any of the above descriptions of a binder, in one embodiment an aqueous extract of the polymeric product has a pH in the range of about 5 to about 10.

For any of the above descriptions of a binder, in one embodiment the amine base is selected from the group consisting of ammonia, a primary amine, and a secondary amine. For any of the above descriptions of a binder, in one embodiment the amine base is NHR₁R₂, wherein R₁ and R₂ are each independently selected from the group consisting of hydrogen, alkyl, cycloalkyl, alkenyl, cycloalkenyl, and heterocyclyl , each of which can be optionally substituted.

For any of the above descriptions of a binder, in one embodiment the binder has a biobased carbon content of between 50% and 98% according to ASTM-D 6866-10. For any of the above descriptions of a binder, in one embodiment the binder has a biobased carbon content of between 60% and 95% according to ASTM-D 6866-10.

For any of the above descriptions of a binder, in one embodiment the polymeric product is selected from the group consisting of phenol-free, formaldehyde-free, carboxylic acid-free, sulfate-free, phosphate-free, and combinations thereof. For any of the above descriptions of a binder, in one embodiment the carbohydrate reactant and the organic acid are non-volatile. For any of the above descriptions of a binder, in one embodiment the polymeric product strongly absorbs light at 420 nm. For any of the above descriptions of a binder, in one embodiment an aqueous extract of the polymeric product is essentially colorless. For any of the above descriptions of a binder, in one embodiment a wet laid mat made therewith has a weathered tensile strength of at least about 250 lbs/in². For any of the above descriptions of a binder, in one embodiment the binder resists a solvent challenge from water.

As used herein, the term "amine base" includes, but is not limited to, ammonia, a primary amine, i.e., NH₂R₁, and a secondary amine, i.e., NHR₁R₂, where R₁ and R₂ are each independently selected in NHR₁R₂, and where R₁ and R₂ are selected from alkyl, cycloalkyl, alkenyl, cycloalkenyl, heterocyclyl , aryl, and heteroaryl, as defined herein. In illustrative embodiments, the binder includes an amine base selected from the group consisting of ammonia, a primary amine, and a secondary amine. In another embodiment, the amine base is NHR₁R₂, wherein R₁ and R₂ are each independently selected from hydrogen, alkyl, cycloalkyl, alkenyl, cycloalkenyl, and heterocyclyl, each of which can be optionally substituted.

Illustratively, the amine base may be substantially volatile or substantially non-volatile under conditions sufficient to promote formation of the thermoset binder during thermal curing. Illustratively, the amine base may be a substantially volatile base, such as, ammonia, ethylamine, diethylamine, dimethylamine, and ethylpropylamine. Alternatively, the amine base may be a substantially non-volatile base,for example, aniline, 1-naphthylamine, 2-naphthylamine, and para-aminophenol.

As used herein, the term "alkyl" includes a chain of carbon atoms, which is optionally branched. As used herein, the term "alkenyl" and "alkynyl" includes a chain of carbon atoms, which is optionally branched, and includes at least one double bond or triple bond, respectively. It is to be understood that alkynyl may also include one or more double bonds. It is to be further understood that alkyl is advantageously of limited length, including C₁-C₂₄, C₁-C₁₂, C₁-C₈, C₁-C₆, and C₁-C₄. It is to be further understood that alkenyl and/or alkynyl may each be advantageously of limited length, including C₂-C₂₄, C₂-C₁₂, C₂-C₈, C₂-C₆, and C₂-C₄. It is appreciated herein that shorter alkyl, alkenyl, and/or alkynyl groups may add less hydrophilicity to the compound and accordingly will have different reactivity towards the carbohydrate reactant and solubility in a binder solution.

As used herein, the term "cycloalkyl" includes a chain of carbon atoms, which is optionally branched, where at least a portion of the chain is cyclic. It is to be understood that cycloalkylalkyl is a subset of cycloalkyl. It is to be understood that cycloalkyl may be polycyclic. Illustrative cycloalkyl include, but are not limited to, cyclopropyl, cyclopentyl, cyclohexyl, 2-methylcyclopropyl, cyclopentyleth-2-yl, adamantyl, and the like. As used herein, the term "cycloalkenyl" includes a chain of carbon atoms, which is optionally branched, and includes at least one double bond, where at least a portion of the chain in cyclic. It is to be understood that the one or more double bonds may be in the cyclic portion of cycloalkenyl and/or the non-cyclic portion of cycloalkenyl. It is to be understood that cycloalkenylalkyl and cycloalkylalkenyl are each subsets of cycloalkenyl. It is to be understood that cycloalkyl may be polycyclic. Illustrative cycloalkenyl include, but are not limited to, cyclopentenyl, cyclohexylethen-2-yl, cycloheptenylpropenyl, and the like. It is to be further understood that chain forming cycloalkyl and/or cycloalkenyl is advantageously of limited length, including C₃-C₂₄, C₃-C₁₂, C₃-C₈, C₃-C₆, and C₅-C₆. It is appreciated herein that shorter alkyl and/or alkenyl chains forming cycloalkyl and/or cycloalkenyl, respectively, may add less lipophilicity to the compound and accordingly will have different behavior.

As used herein, the term "heteroalkyl" includes a chain of atoms that includes both carbon and at least one heteroatom, and is optionally branched. Illustrative heteroatoms include nitrogen, oxygen, and sulfur. In certain variations, illustrative heteroatoms also include phosphorus, and selenium. As used herein, the term "cycloheteroalkyl" including heterocyclyl and heterocycle, includes a chain of atoms that includes both carbon and at least one heteroatom, such as heteroalkyl, and is optionally branched, where at least a portion of the chain is cyclic. Illustrative heteroatoms include nitrogen, oxygen, and sulfur. In certain variations, illustrative heteroatoms also include phosphorus, and selenium. Illustrative cycloheteroalkyl include, but are not limited to, tetrahydrofuryl, pyrrolidinyl, tetrahydropyranyl, piperidinyl, morpholinyl, piperazinyl, homopiperazinyl, quinuclidinyl, and the like.

The term "optionally substituted" as used herein includes the replacement of hydrogen atoms with other functional groups on the radical that is optionally substituted. Such other functional groups illustratively include, but are not limited to, amino, hydroxyl, halo, thiol, alkyl, haloalkyl, heteroalkyl, aryl, arylalkyl, arylheteroalkyl, nitro, sulfonic acids and derivatives thereof, carboxylic acids and derivatives thereof, and the like. Illustratively, any of amino, hydroxyl, thiol, alkyl, haloalkyl, heteroalkyl, aryl, arylalkyl, arylheteroalkyl, and/or sulfonic acid is optionally substituted.

As used herein, the term "aryl" includes monocyclic and polycyclic aromatic groups, including aromatic carbocyclic and aromatic heterocyclic groups, each of which may be optionally substituted. As used herein, the term "carbaryl" includes aromatic carbocyclic groups, each of which may be optionally substituted. Illustrative aromatic carbocyclic groups described herein include, but are not limited to, phenyl, naphthyl, and the like. As used herein, the term "heteroaryl" includes aromatic heterocyclic groups, each of which may be optionally substituted. Illustrative aromatic heterocyclic groups include, but are not limited to, pyridinyl, pyrimidinyl, pyrazinyl, triazinyl, tetrazinyl, quinolinyl, quinazolinyl, quinoxalinyl, thienyl, pyrazolyl, imidazolyl, oxazolyl, thiazolyl, isoxazolyl, isothiazolyl, oxadiazolyl, thiadiazolyl, triazolyl, benzimidazolyl, benzoxazolyl, benzthiazolyl, benzisoxazolyl, benzisothiazolyl, and the like.

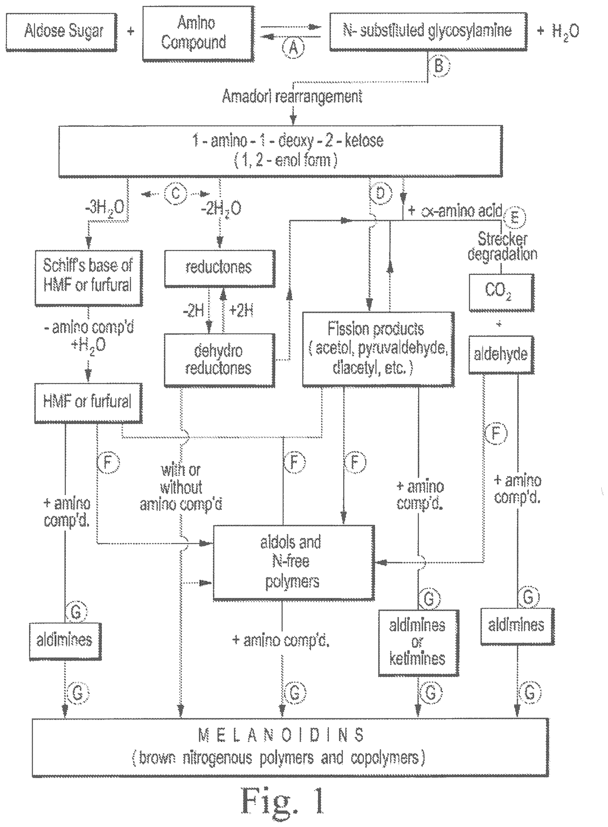

While not limited to a particular theory, one aspect of the present disclosure is that the amine base and the carbohydrate reactant are Maillard reactants that react to form a melanoidin product. Fig 1 shows a schematic of a Maillard reaction, which culminates in the production of melanoidins. In its initial phase, a Maillard reaction involves a carbohydrate reactant, for example, a reducing sugar (note that the carbohydrate reactant may come from a substance capable of producing a reducing sugar under Maillard reaction conditions). The reaction also involves condensing the carbohydrate reactant (*e.g*., reducing sugar) with an amine reactant, *i.e.*, a compound possessing an amino group. In other words, the carbohydrate reactant and the amine reactant are the melanoidin reactants for a Maillard reaction. The condensation of these two constituents produces an *N*-substituted glycosylamine. For a more detailed description of the Maillard reaction see, Hodge, J.E. Chemistry of Browning Reactions in Model Systems J. Agric. Food Chem. 1953, 1, 928-943, the disclosure of which is hereby incorporated herein by reference. The literature on Maillard reactions focuses on a melanoidins produced from amino acids. One aspect of the present disclosure is that the discovery that sulfonic and phosphonic acids and derivatives thereof may be used to enhance this reaction so that the resulting polymer has advantageous utility as a binder.

In the present invention, the binder has a mole ratio of the carbohydrate reactant to the organic acid is in the range of about 2:1 to about 30:1. In one embodiment, the mole ratio of the carbohydrate reactant to the organic acid is in the range of about 3:1 to about 10:1. According to one aspect, the cure rate is a function of the molar ratio of the carbohydrate reactant to the amine base. According to this function, it was established that as the ratio decreased, the cure rate increased; thus the cure time decreased. According to another aspect, the cure rate is a function of the molar ratio of the carbohydrate reactant to the organic acid. According to this function, it was established that as the ratio decreased, the cure rate increased; thus the cure time decreased. Accordingly, one aspect of the present disclosure is that the cure time is directly related to the molar ratio of the carbohydrate reactant to the amine base and/or the organic acid provided that other parameters are held equivalent.

Another aspect of the reaction, as described herein, is that initially the aqueous reactant solution (which may be dehydrated and used as a binder) has an alkaline pH. One aspect of the present disclosure is that the alkaline binder solution is less corrosive towards metal than an acidic solution. Accordingly, one feature of the present disclosure which overcomes a substantial barrier to the industry is that the binder described herein has low corrosivity towards the manufacturing equipment which may be used to produce materials which include the present binder because of the alkaline binder composition.

In illustrative embodiments, a method of making a collection of matter bound with a polymeric binder comprises preparing a solution containing reactants for producing the polymeric binder and a solvent, wherein the reactants include a carbohydrate reactant, an amine base and an organic acid; disposing the solution onto the collection of matter; volatilizing the solvent to form an uncured product, and subjecting the uncured product to conditions that cause the carbohydrate reactant and the amine base to polymerize to form the polymeric binder. For the above method, the carbohydrate reactant, the amine base and the organic acid may have any of the values and combinations of values described in the embodiments above. One embodiment is one wherein the carbohydrate reactant is a monosaccharide, a disaccharide, a polysaccharide, or a reaction product thereof; the amine base is selected from the group consisting of ammonia, a primary amine, and a secondary amine; and the organic acid is R-Q(=O)ₘ(-OH)ₙ, Q is phosphorus (P), m is 1, and n is 2 or Q is sulfur (S), m is 2, and n is 1, and R is alkyl, alkenyl, alkynyl, cycloalkyl, cycloalkenyl, heteroalkyl, heteroalkenyl, cycloheteroalkyl, cycloheteroalkenyl, aryl, or arylalkyl, each of which is optionally substituted.

In one embodiment of the above, the uncured product comprises about 70% to about 90% carbohydrate reactant, about 1% to about 5% amine base reactant, and about 5% to about 25% organic acid reactant.

In illustrative embodiments, the collection of matter includes insulating fibers. In one embodiment, a fiber insulation product is described which includes insulating fibers and a binder. As used herein, the term "insulating fiber," indicates heat-resistant fibers suitable for withstanding elevated temperatures. Examples of such fibers include, but are not limited to, mineral fibers (glass fibers, slag wool fibers, and rock wool fibers), aramid fibers, ceramic fibers, metal fibers, carbon fibers, polyimide fibers, certain polyester fibers, and rayon fibers. Illustratively, such fibers are substantially unaffected by exposure to temperatures above about 120 °C. In one embodiment, the insulating fibers are glass fibers. In yet another embodiment, the mineral fibers are present in the range from about 70% to about 99% by weight.

In illustrative embodiments, the collection of matter includes cellulosic fibers. For example, the cellulosic fibers may be wood shavings, sawdust, wood pulp, or ground wood. In yet another embodiment, the cellulosic fibers may be other natural fibers such as jute, flax, hemp, and straw. The binder disclosed herein may be used as in the place of the binder described in Published PCT application WO 2008/089847, which is incorporated herein by reference in its entirety. In one embodiment, a composite wood board comprising wood particles and a binder is disclosed. In another embodiment, the composite wood board is formaldehyde free. In one embodiment, the composite wood board has a nominal thickness range of greater than 6 mm to 13 mm, and has a modulus of elasticity (MOE) of at least about 1050 N/mm², a bending strength (MOR) of at least about 7 N/mm², and an internal bond strength (IB) of at least 0.20 N/mm². In another embodiment, the composite wood board has a nominal thickness range of greater than 6 mm to 13 mm, and has a bending strength (MOR) of at least about 12.5 N/mm², and an internal bond strength (IB) of at least 0.28 N/mm². In another embodiment, the composite wood board has a nominal thickness range of greater than 6 mm to 13 mm, and has a modulus of elasticity (MOE) of at least about 1800 N/mm², a bending strength (MOR) of at least about 13 N/mm², and an internal bond strength (IB) of at least 0.40 N/mm². In another embodiment, the composite wood board has a modulus of elasticity (MOE) of at least about 1800 N/mm². In another embodiment, the composite wood board has a modulus of elasticity (MOE) of at least about 2500 N/mm². In another embodiment, the composite wood board has a bending strength (MOR) of at least about 14 N/mm². In yet another embodiment, the composite wood board has a bending strength (MOR) is at least about 18 N/mm². In one embodiment, the composite wood board has an internal bond strength (IB) of at least 0.28 N/mm². In yet another embodiment, the composite wood board has an internal bond strength (IB) is at least 0.4 N/mm². In yet another embodiment, the composite wood board swells less than or equal to about 12%, as measured by a change in thickness, after 24 hours in water at 20° C. In another embodiment, he composite wood board has a water absorption after 24 hours in water at 20 °C of less than or equal to about 40%.

In illustrative embodiments the composite wood board is a wood particleboard, an orientated strandboard, or a medium density fiberboard. In one embodiment, the binder comprises from about 8% to about 18% by weight (weight of dry resin to weight of dry wood particles) of the composite wood board. In another embodiment, the composite wood board further comprises a wax. In yet another embodiment, the composite wood board comprises from about 0.1% to about 2% wax by weight of the composite wood board. In the present invention, the method of making a collection of matter bound with a polymeric binder may further include preparing a solution by adding an amount of a carbohydrate reactant and an amount of the organic acid so a molar ratio is in the range of about 2:1 to about 30:1. In another embodiment, the mole ratio of the carbohydrate reactant to the organic acid is in the range of about 3:1 to about 10:1.

In one embodiment, preparing the solution includes adding the carbohydrate reactant, the amine base, and the organic acid to an aqueous solution. In another embodiment, preparing the solution includes adjusting the pH of the solution to within the range of about 8 to about 12. In yet another embodiment, the method of making a collection of matter bound with a polymeric binder may further comprise packaging the uncured product in a packaging material suitable for storage.

In illustrative embodiments, the present disclosure relates to a composition comprising a collection of matter and a binder, the binder comprising polymeric products of a reaction between a carbohydrate reactant, an amine base, and an organic acid, the polymeric products being substantially water insoluble.

In one embodiment, the collection of matter includes mineral fibers, aramid fibers, ceramic fibers, metal fibers, carbon fibers, polyimide fibers, polyester fibers, rayon fibers, or cellulosic fibers. For example, cellulosic fibers may include wood shavings, sawdust, wood pulp, and/or ground wood. In one embodiment, the collection of matter includes sand or other inorganic particulate matter. In one embodiment, the collection of matter is coal particulates. In one embodiment, the carbohydrate reactant is selected from the group consisting of dextrose, xylose, fructose, dihydroxyacetone, and mixtures thereof.

In another embodiment, the composition further comprises a silicon-containing compound. For example, the silicon-containing compound may be a gamma-aminopropyltriethoxysilane, gamma-glycidoxypropyltrimethoxysilane, aminoethylaminopropyltrimethoxysilane, n-propylamine silane, or mixtures thereof. In one embodiment, the n-propylamine silane may be an aminofunctional oligomeric siloxane. In another embodiment, the composition comprises a corrosion inhibitor selected from the group consisting of dedusting oil, mono-, di-, or tri-ammonium phosphate, sodium metasilicate pentahydrate, melamine, tin (II)oxalate, and a methylhydrogen silicone fluid emulsion.

In further illustrative embodiments, the binder may be disposed upon a collection of fibers, substantially dehydrated, packaged, and then stored or sold to another party. An uncured product sold to another party for use in further manufacturing processes may be referred to as "ship-out uncured." An uncured product stored for use in further manufacturing processes may be referred to as "plant uncured." In selling or storing this type of product, it is packaged in suitable containers or bags.

In illustrative embodiments, a packaged uncured fiber product comprises an uncured binder composition and a collection of fibers, wherein (i) the uncured binder composition is in contact with the collection of fibers consolidating the collection of fibers and (ii) the uncured binder composition in contact with the collection of fibers is packaged in a suitable packaging material. In one embodiment, the amount of moisture in the uncured binder composition may be in a range from about 1% to about 15% by weight based on a total weight of the product. In yet another embodiment, the suitable packaging material may be capable of maintaining the amount of moisture in the uncured binder composition to within about 20% of an original moisture level for a period of one week at an ambient temperature and an ambient pressure. In one embodiment, the packaged uncured fiber product comprises from about 3% to about 30% by weight of the uncured binder composition based on weight of the packaged uncured fiber product without considering the weight of the suitable packaging material. In one embodiment, the packaged uncured fiber product comprises from about 60% to about 97% by weight fibers based on weight of the packaged uncured fiber insulation product without considering the weight of the suitable packaging material.

As used herein, a comparable phenol-formaldehyde binder composition is like that described according to U.S. Patent No. 6,638,882, which patent is hereby incorporated by reference herein in its entirety.

As discussed below, various additives can be incorporated into the binder composition. These additives give the binders of the present disclosure additional desirable characteristics. For example, the binder may include a silicon-containing coupling agent. Many silicon-containing coupling agents are commercially available from the Dow-Corning Corporation, Evonik Industries, and Momentive Performance Materials. Illustratively, the silicon-containing coupling agent includes compounds such as silylethers and alkylsilyl ethers, each of which may be optionally substituted, such as with halogen, alkoxy, amino, and the like. In one variation, the silicon-containing compound is an amino-substituted silane, such as, gamma-aminopropyltriethoxy silane (SILQUEST A-1101; Momentive Performance Materials, Corporate Headquarters: 22 Corporate Woods Boulevard, Albany, NY 12211 USA). In another variation, the silicon-containing compound is an amino-substituted silane, for example, aminoethylaminopropyltrimethoxy silane (Dow Z-6020; Dow Chemical, Midland, MI; USA). In another variation, the silicon-containing compound is gamma-glycidoxypropyltrimethoxysilane (SILQUEST A-187; Momentive). In yet another variation, the silicon-containing compound is an n-propylamine silane such as an aminofunctional oligomeric siloxane (HYDROSIL 2627, Evonik Industries, 379 Interpace Pkwy, Parsippany, NJ 07054).

The silicon-containing coupling agents are typically present in the binder in the range from about 0.1% to about 1% by weight based upon the dissolved binder solids (*i.e*., about 0.05% to about 3% based upon the weight of the solids added to the aqueous solution). In one application, one or more of these silicon-containing compounds can be added to the aqueous binder solution. The binder is then applied to the material to be bound. Thereafter, the binder may be cured if desired. These silicone containing compounds enhance the ability of the binder to adhere to the matter the binder is disposed on, such as glass fibers. Enhancing the binder's ability to adhere to the matter improves, for example, its ability to produce or promote cohesion in non- or loosely- assembled substance(s).

In another illustrative embodiment, a binder of the present disclosure may include one or more corrosion inhibitors. These corrosion inhibitors prevent or inhibit the eating or wearing away of a substance, such as, metal caused by chemical decomposition brought about by an acid. When a corrosion inhibitor is included in a binder of the present disclosure, the binder's corrosivity is decreased as compared to the corrosivity of the binder without the inhibitor present. In one embodiment, these corrosion inhibitors can be utilized to decrease the corrosivity of the glass fiber-containing compositions described herein. Illustratively, corrosion inhibitors include one or more of the following, a dedusting oil, or a mono-, di-, or tri-ammonium ammonium phosphate, sodium metasilicate pentahydrate, melamine, tin(II)oxalate, and/or methylhydrogen silicone fluid emulsion. When included in a binder of the present disclosure, corrosion inhibitors are typically present in the binder in the range from about 0.5% to about 2% by weight based upon the dissolved binder solids. One aspect of the present disclosure is that the need for corrosion inhibiting additives is greatly reduced by the alkalinity of the binder solution and the substantially dehydrated uncured binder. In one embodiment, the binder is free from corrosion inhibitors and the corrosivity of the binder solution is within the acceptable range.

In illustrative embodiments, the binder may further include a non-aqueous moisturizer. The non-aqueous moisturizer may include one or more polyethers. For example, the non-aqueous moisturizer may include an ethylene oxide or propylene oxide condensates having straight and/or branched chain alkyl and alkaryl groups. In one embodiment, the non-aqueous moisturizer includes a polyethylene glycol, a polypropylene glycol ether, a thioether, a polyoxyalkylene glycol (*e.g*., Jeffox TP400®), a dipropylene glycol, and/or a polypropylene glycol (*e.g.,* Pluriol P425® or Pluriol 2000®). In one embodiment, the non-aqueous moisturizer comprises a polyoxyalkylene glycol or a polypropylene glycol. In another embodiment, the non-aqueous moisturizer includes a compound based on a polyhydroxy compound (*e.g*., a partially or fully esterified polyhydroxy compound). In another embodiement, the non-aqueous moisturizer includes a polyhydroxy based on a glycerine, a propylene glycol, an ethylene glycol, a glycerine acetate, a sorbitol, a xylitol or a maltitol.

In another embodiment, the non-aqueous moisturizer includes other compounds having multiple hydroxyl groups based on tetrahydrofuran, a caprolactone, and/or a alkylphenoxypoly(ethyleneoxy)ethanol having alkyl groups containing from about 7 to about 18 carbon atoms and having from about 4 to about 240 ethyleneoxy units. For example, the non-aqueous moisturizer may include a heptylphenoxypoly(ethyleneoxy)ethanol and/or a nonylphenoxypoly(ethyleneoxy)ethanol. In another embodiment, the non-aqueous moisturizer includes a polyoxyalkylene derivative of hexitol such as a sorbitan, sorbide, mannitan, and/or a mannide. In yet another embodiment, the non-aqueous moisturizer may include a partial long-chain fatty acid ester, such as a polyoxyalkylene derivative of sorbitan monolaurate, sorbitan monopalmitate, sorbitan monostearate, sorbitan tristearate, sorbitan monooleate, and/or sorbitan trioleate.

In illustrative embodiments, the non-aqueous moisturizer includes a condensate of ethylene oxide with a hydrophobic base, the base being formed by condensing propylene oxide with propylene glycol. In one embodiment, the non-aqueous moisturizer includes a sulfur containing condensate, such as those prepared by condensing ethylene oxide with a higher alkyl mercaptan (*e.g*., nonyl, dodecyl, tetradecyl mercaptan, or alkylthiophenols having about 6 to about 15 carbon atoms in the alkyl group). In another embodiment, the non-aqueous moisturizer includes an ethylene oxide derivative of a long-chain carboxylic acid, such as lauric, myristic, palmitic, or oleic acids. In yet another embodiment, the non-aqueous moisturizer includes an ethylene oxide derivative of a long-chain alcohol such as octyl, decyl, lauryl, or cetyl alcohols. In another embodiment, the non-aqueous moisturizer includes an ethylene oxide/tetrahydrofuran copolymer or an ethylene oxide/propylene oxide copolymer.

The following examples illustrate specific embodiments in further detail. These examples are provided for illustrative purposes only and should not be construed as limiting the disclosure to any particular physical configuration in any way. Only examples covered by the scope of the claims form part of the invention.

### EXAMPLES

### Example 1 - Composition based on dry solids:

- 85.04 parts carbohydrate (dextrose)
- 13.09 parts organic acid (para-toluenesulfonic acid)
- 1.56 parts amine base (ammonia)
- 0.31 parts silane (gamma-aminopropyltriethoxysilane)

### Example 2 - Composition based on dry solids:

- 80.69 parts carbohydrate (dextrose)
- 16.9 parts organic acid (para-toluenesulfonic acid)
- 2.11 parts amine base (ammonia)
- 0.30 parts silane (gamma-aminopropyltriethoxysilane)

### Example 3 - Composition based on dry solids:

- 76.26 parts carbohydrate (dextrose)
- 20.96 parts organic acid (para-toluenesulfonic acid)
- 2.5 parts amine base (ammonia)
- 0.28 parts silane (gamma-aminopropyltriethoxysilane)

### Comparative Example - Example 4 - Composition based on dry solids:

- 90.22 parts carbohydrate (dextrose)
- 7.79 parts organic acid (methanesulfonic acid)
- 1.65 parts amine base (ammonia)
- 0.33 parts silane (gamma-aminopropyltriethoxysilane)

### Comparative Example - Example 5 - Composition based on dry solids:

- 87.19 parts carbohydrate (dextrose)
- 10.2 parts organic acid (methanesulfonic acid)
- 2.28 parts amine base (ammonia)
- 0.32 parts silane (gamma-aminopropyltriethoxysilane)

### Comparative Example - Example 6 - Composition based on dry solids:

- 84.05 parts carbohydrate (dextrose)
- 12.89 parts organic acid (methanesulfonic acid)
- 2.75 parts amine base (ammonia)
- 0.31 parts silane (gamma-aminopropyltriethoxysilane)

### Comparative Example 1 - Composition based on dry solids:

- 92.86 parts carbohydrate (dextrose)
- 6.77 inorganic catalyst (diammonium phosphate)
- 0.36 parts silane (gamma-aminopropyltriethoxysilane)

### Comparative Example 2 - Composition based on dry solids:

- 86.14 parts carbohydrate (dextrose)
- 13.54 inorganic catalyst (diammonium phosphate)
- 0.33 parts silane (gamma-aminopropyltriethoxysilane)

### Comparative Example 3 - Composition based on dry solids:

- 91.14 parts carbohydrate (dextrose)
- 7.5 parts inorganic catalyst (ammonium sulfate)
- 1 parts amine base (ammonia)
- 0.36 parts silane (gamma-aminopropyltriethoxysilane)

### Comparative Example 4 - Composition based on dry solids:

- 81.59 parts carbohydrate (dextrose)
- 17.09 parts inorganic catalyst (ammonium sulfate)
- 1 parts amine base (ammonia)
- 0.32 parts silane (gamma-aminopropyltriethoxysilane)

*Procedure for evaluating dry and weathered tensile strength.* When evaluated for their dry and "weathered" tensile strength, fiber-based dogbones were prepared with a given binder to provide an indication of the likely tensile strength and the likely durability, respectively, of a fiberglass product manufactured with that particular binder. Predicted durability is based on a dogbone's weathered tensile strength : dry tensile strength ratio as well as the comparative absolute strength's compared to other comparable binder formulations.

The first step in making a fiber-based dogbone is preparation of a wet laid mat. A binder-free rotary fiberized mineral wool mat is cut into 1" x 1" cubes. The fibers are deposited into a mixing bucket with an agitator. The agitator is used to disperse the fibers in an aqueous solution which may include a dispersant (e.g. of Rhodameen VP-532/SPB). Upon dispersion, the fibers are deposited into a deckle box. After the water is removed from the deckle box, a wet laid mat is formed. A vacuum procedure and drying oven is used to dry the mat. The binder solutions may be sprinkled onto the wet laid mats at various solids levels, but exemplary binder content is 22.4% solids. Excess binder can be removed via suction and then the mat allowed to dry.

To cure the wet laid mats, a mold press may be used. For example, the mats may be cured for one minute at 400 °F [∼205 °C]. After curing, the dogbone specimens may be cut out using a dogbone mold and a rubber mallet. The dry dogbones may be tested for tensile strength using an INSTRON instrument, using previously recorded weights. If the dogbones are to be weathered, they may be placed in an autoclave for 45 minutes at 130 °C. When the autoclave cycle is complete, excess moisture is removed by placing the samples in a dessicator overnight.

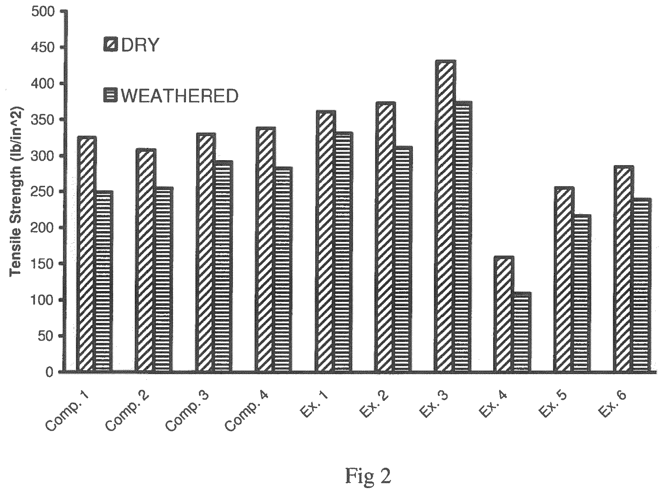

*Test Procedure for Breaking Dogbones:* The dogbone was loaded on the 5500 R Instron machine while ensuring that the proper load cell is installed (i.e., Static Load Cell 1 kN), and the machine was allowed to warm up for fifteen minutes. During this period of time, tensile testing grips are verified as being installed on the machine. The load cell was zeroed and balanced, and then one set of dogbones was tested at a time. The dogbones were removed from their plastic storage bag one at a time and the thickness was measured. The measured thickness of the dogbone (in inches) was entered, as specimen thickness. The previously recorded weight (in grams) was then entered into the computer associated with the Instron machine. A dogbone specimen was then placed into the tensile grips, and testing initiated via the keypad on the Instron machine. After removing a dogbone specimen, the measured breaking point is entered into the computer associated with the Instron machine, and testing is continued until all dogbones in a set were tested. The results of this test can be seen in Fig 2.

Fig 2 shows the effect of the ratio of the organic acid to the carbohydrate on both the dry and weathered tensile strength for two exemplary organic acids. Fig 2 shows that the water hold-up for the disclosed compositions is maintained and that for some embodiments the tensile properties are generally improved when compared to the other carbohydrate binders. Specifically, it was observed that the tensile strength, both with and without weathering, using para-toluenesulfonic acid was superior to the comparative examples. Methanesulfonic acid was observed to generally perform at a lower level compared to both the para-toluenesulfonic acid samples and the comparative examples. However, additional modifications to the formulation may enable a composition based on methanesulfonic acid to meet or exceed the results shown here.

*Biobased Carbon Content Using Radiocarbon Analysis:* There are three methods (A-C) of determining biobased carbon content included within ASTM-D 6866-10, the procedure of which is incoporated herein by reference in it entirety. Briefly, method A utilizes Liquid Scintillation Counting (LSC) radiocarbon (¹⁴C) techniques to quantify the biobased content. This test method is based on LSC analysis of CO₂ cocktails after collecting the CO₂ in a suitable absorbing solution. Method B uses Accelerator Mass Spectrometry (AMS) and Isotope Ratio Mass Spectrometry (IRMS). Method C uses LSC techniques to quantify the biobased content of a sample carbon that has been converted to benzene. The methods discriminate between carbon from contemporary carbon input (biocarbon) and that derived from fossil-based input. A measurement of a product's ¹⁴C/¹²C content is determined relative to the modern carbon-based oxalic acid radiocarbon Standard Reference Material (SRM) 4990c. Illustratively, the binder has a biobased carbon content of between 50% and 98% according to ASTM-D 6866-10. In another embodiment, the binder has a biobased carbon content of between 60% and 95% according to ASTM-D 6866-10.

*Procedure for analyzing a binder sample with gas pyrolysis.* Approximately 10 g of a cured product having the binder thereon is placed in a test tube, which tube is then heated to 1000 °F for 2.5 minutes at which time the headspace is sampled and analyzed by gas chromatography/mass spectrometry (GC/MS) under the following conditions: Oven, 50 °C for one minute - 10 °C/minute to 300 °C for 10 minutes; Inlet, 280 °C splitless; Column, HP-5 30 mm x 0.32 mm x 0.25 um; Column flow, 1.11 mL/minute Helium; Detector, MSD 280 °C; Injection volume, 1 mL; Detector mode, scan 34-700 amu; Threshold, 50; and Sampling Rate, 22 scans/second. A computer search of the mass spectrum of a chromatographic peak in the sample is made against the Wiley library of mass spectra. The best match is reported. A quality index (closeness of match to the library spectra) ranging from 0 to 99 is generated. Only the identity of peaks with a quality index of greater than or equal to 90 is reported.

The following table provides representative pyrolysis data that one expects from the GC/MS analysis of gaseous compounds produced during pyrolysis of a melanoidin based binder composition.

| Retention Time (min) | Tentative Identification | % Peak Area |
|---|---|---|
| 1.15 | 2-cyclopenten-1-one | 10.67 |
| 1.34 | 2,5-dimethyl-furan | 5.84 |
| 3.54 | furan | 2.15 |
| 3.60 | 3-methyl-2,5-furandione | 3.93 |
| 4.07 | phenol | 0.38 |
| 4.89 | 2,3-dimethyl-2-cyclopenten-1-one | 1.24 |
| 5.11 | 2-methyl phenol | 1.19 |
| 5.42 | 4-methyl phenol | 2.17 |
| 6.46 | 2,4-dimethyl-phenol | 1.13 |
| 10.57 | dimethylphthalate | 0.97 |
| 17.89 | octadecanoic acid | 1.00 |
| 22.75 | erucylamide | 9.72 |

## Claims

1. A method of making a collection of matter bound with a polymeric binder comprising:
preparing a solution containing reactants for producing the polymeric binder and a solvent, wherein the reactants include:
(i) a reducing sugar,
(ii) an amine base reactant, and
(iii) an organic acid reactant R-Q(=O)ₘ(-OH)ₙ, where
Q is phosphorus (P), m is 1, and n is 2 or Q is sulfur (S), m is 2, and n is 1, and
R is 4-methylphenyl, and
wherein the mole ratio of the reducing sugar to the organic acid is in the range of about 2:1 to about 30:1;
disposing the solution onto the collection of matter;
volatilizing the solvent to form an uncured product, and
subjecting the uncured product to conditions that cause the reducing sugar to react with amine base to polymerize to form the polymeric binder.

2. The method in accordance with claim 1, wherein the reducing sugar is obtained by in situ conversion to a reducing sugar.

3. The method in accordance with any preceding claim, wherein the reducing sugar is selected from the group consisting of dextrose, xylose, fructose, dihydroxyacetone, and mixtures thereof.

4. The method in accordance with any preceding claim, wherein the mole ratio of the reducing sugar to the organic acid is in the range of about 3:1 to about 10:1.

5. The method in accordance with any preceding claim, wherein the amine base is selected from the group consisting of ammonia, a primary amine, and a secondary amine.

6. The method in accordance with any preceding claim, wherein the amine base is NHR₁R₂, wherein R₁ and R₂ are each independently selected from the group consisting of hydrogen, alkyl, cycloalkyl, alkenyl, cycloalkenyl, and heterocyclyl, each of which can be optionally substituted.

7. The method in accordance with any preceding claim, wherein the collection of matter comprises fibers selected from the group consisting of mineral fibers, aramid fibers, ceramic fibers, metal fibers, carbon fibers, polyimide fibers, polyester fibers, rayon fibers, and cellulosic fibers.

8. The method in accordance with any preceding claim, wherein the collection of matter is glass fibers, notably wherein the collection of matter is glass fibers and wherein the glass fibers are present in the range from about 70% to about 99% by weight.

9. The method in accordance with any preceding claim, wherein the collection of matter comprises cellulosic fibers and wherein the cellulosic fibers are selected from the group consisting of wood shavings, sawdust, wood pulp, ground wood, jute, flax, hemp, and straw.

10. The method in accordance with any preceding claim, wherein the solution comprises 70% to 90% reducing sugar, preferably 1% to 5% amine base reactant, and more preferably 5% to 25% organic acid reactant.

11. The method in accordance with any preceding claim wherein preparing the solution includes adjusting the pH of the solution to within the range of 8 to 12.

12. The method in accordance with any preceding claim wherein the organic acid is a phosphonic or a sulfonic acid.

13. The method in accordance with any preceding claim wherein the solution comprises a silicon-containing compound, notably a silicon-containing compound selected from the group consisting of gamma-aminopropyltriethoxysilane, gamma-glycidoxypropyltrimethoxysilane, aminoethylaminopropyltrimethoxysilane, n-propylamine silane, and mixtures thereof.

## Patentansprüche

1. Verfahren zur Herstellung einer Ansammlung aus Material, gebunden mit einem Polymerbindemittel, umfassend:
Herstellen einer Lösung, enthaltend Reaktanten zur Herstellung des Polymerbindemittels und ein Lösungsmittel, wobei die Reaktanten einschließen:
(i) einen reduzierenden Zucker;
(ii) einen Aminbasenreaktanten, und
(iii) einen organischen Säurereaktanten R-Q(=O)ₘ(-OH)ₙ, wobei Q Phosphor (P) ist, m 1 ist und n 2 ist, oder Q Schwefel (S), m 2 ist und n 1 ist, und
R ist 4-Methylphenyl, und;
wobei das Molverhältnis des reduzierenden Zuckers zu der organischen Säure in dem Bereich von etwa 2:1 bis etwa 30:1 ist;
Verteilen der Lösung auf der Ansammlung aus Material;
Verdampfen des Lösungsmittels zum Bilden eines ungehärteten Produkts, und
Aussetzen des ungehärteten Produkts Bedingungen, die den reduzierenden Zucker dazu veranlassen, mit Aminbase zu reagieren zum Polymerisieren zur Bildung des Polymerbindemittels.

2. Verfahren nach Anspruch 1, wobei der reduzierende Zucker erhalten ist durch in situ Umwandlung zu einem reduzierenden Zucker.

3. Verfahren nach einem der vorstehenden Ansprüche, wobei der reduzierende Zucker ausgewählt ist aus der Gruppe, bestehend aus Dextrose, Xylose, Fructose, Dihydroxyaceton und Mischungen davon.

4. Verfahren nach einem der vorstehenden Ansprüche, wobei das Molverhältnis des reduzierenden Zuckers zu der organischen Säure in dem Bereich von etwa 3:1 bis etwa 10:1 ist.

5. Verfahren nach einem der vorstehenden Ansprüche, wobei die Aminbase ausgewählt ist aus der Gruppe, bestehend aus Ammoniak, einem primären Amin und einem sekundären Amin.

6. Verfahren nach einem der vorstehenden Ansprüche, wobei die Aminbase NHR₁R₂ ist, wobei R₁ und R₂ jeweils unabhängig ausgewählt sind aus der Gruppe, bestehend aus Wasserstoff, Alkyl, Cycloalkyl, Alkenyl, Cycloalkenyl und Heterocyclyl, welches jeweils gegebenenfalls substituiert ist.

7. Verfahren nach einem der vorstehenden Ansprüche, wobei die Ansammlung aus Material Fasern, ausgewählt aus der Gruppe, bestehend aus Mineralfasern, Aramidfasern, Keramikfasern, Metallfasern, Kohlenstofffasern, Polyimidfasern, Polyesterfasern, Rayonfasern und Cellulosefasern, umfasst.

8. Verfahren nach einem der vorstehenden Ansprüche, wobei die Ansammlung aus Material Glasfasern ist, insbesondere wobei die Ansammlung aus Material Glasfasern ist und wobei die Glasfasern in dem Bereich von etwa 70 Gew.-% bis etwa 99 Gew.-% vorhanden sind.

9. Verfahren nach einem der vorstehenden Ansprüche, wobei die Ansammlung aus Material Cellulosefasern umfasst und wobei die Cellulosefasern ausgewählt sind aus der Gruppe, bestehend aus Holzspänen, Sägemehl, Zellstoff, Holzschliff, Jute, Flachs, Hanf und Stroh.

10. Verfahren nach einem der vorstehenden Ansprüche, wobei die Lösung 70% bis 90% reduzierenden Zucker, bevorzugt 1% bis 5% Aminbasereaktant und mehr bevorzugt 5 bis 25% organischen Säurereaktant umfasst.

11. Verfahren nach einem der vorstehenden Ansprüche, wobei Herstellen der Lösung Einstellen des pH der Lösung auf innerhalb des Bereichs von 8 bis 12 einschließt.

12. Verfahren nach einem der vorstehenden Ansprüche, wobei die organische Säure eine Phosphon- oder Sulfonsäure ist.

13. Verfahren nach einem der vorstehenden Ansprüche, wobei die Lösung eine siliciumhaltige Verbindung umfasst, insbesondere eine siliciumhaltige Verbindung, ausgewählt aus der Gruppe, bestehend aus gamma-Aminopropyltriethoxysilan, gamma-Glycidoxypropyltrimethoxysilan, Aminoethylaminopropyltrimethoxysilan, n-Propylaminsilan und Mischungen davon.

## Revendications

1. Procédé de fabrication d'un ensemble de matières lié à l'aide d'un liant polymérique, comprenant :
la préparation d'une solution contenant des réactifs pour produire le liant polymérique et un solvant, où les réactifs comprennent :
(i) un sucre réducteur,
(ii) un réactif basique amine, et
(iii) un réactif acide organique R-Q(=O)ₘ(-OH)ₙ, où Q est le phosphore (P), m est 1 et n est 2 ou Q est le soufre (S), m est 2 et n est 1, et
R est 4-méthylphényle, et
où le rapport molaire du sucre réducteur à l'acide organique se situe dans l'intervalle allant d'environ 2:1 à environ 30:1 ;
la disposition de la solution sur l'ensemble de matières ;
la volatilisation du solvant pour former un produit non réticulé, et
le fait de soumettre le produit non réticulé à des conditions qui provoquent la réaction de polymérisation du sucre réducteur avec la base amine pour former le liant polymérique.

2. Procédé selon la revendication 1, où le sucre réducteur est obtenu *in situ,* par conversion en un sucre réducteur.

3. Procédé selon l'une quelconque des revendications précédentes, où le sucre réducteur est choisi parmi le groupe consistant en le dextrose, le xylose, le fructose, la dihydroxyacétone et leurs mélanges.

4. Procédé selon l'une quelconque des revendications précédentes, où le rapport molaire du sucre réducteur à l'acide organique se situe dans l'intervalle allant d'environ 3:1 à environ 10:1.

5. Procédé selon l'une quelconque des revendications précédentes, où la base amine est choisie parmi le groupe consistant en ammoniac, amine primaire et amine secondaire.

6. Procédé selon l'une quelconque des revendications précédentes, où la base amine est NHR₁R₂, où R₁ et R₂ sont chacun indépendamment choisis parmi le groupe consistant en hydrogène, alkyle, cycloalkyle, alcényle, cycloalcényle et hétérocyclyle, chacun pouvant être le cas échéant substitué.

7. Procédé selon l'une quelconque des revendications précédentes, où l'ensemble de matières comprend des fibres choisies parmi le groupe consistant en des fibres minérales, des fibres d'aramide, des fibres céramiques, des fibres métalliques, des fibres de carbone, des fibres de polyimide, des fibres de polyester, des fibres de rayonne et des fibres cellulosiques.

8. Procédé selon l'une quelconque des revendications précédentes, où l'ensemble de matières est des fibres de verre, notamment où l'ensemble des matières est des fibres de verre et où les fibres de verre sont présentes dans la plage allant d'environ 70% à environ 99% en poids.

9. Procédé selon l'une quelconque des revendications précédentes, où l'ensemble de matières comprend des fibres cellulosiques et où les fibres cellulosiques sont choisies parmi le groupe consistant en des copeaux de bois, de la sciure, de la pulpe de bois, du bois moulu, le jute, le lin, le chanvre et la paille.

10. Procédé selon l'une quelconque des revendications précédentes, où la solution comprend 70% à 90% de sucre réducteur, de préférence 1% à 5% de réactif basique amine, et de manière plus préférée, 5% à 25% de réactif acide organique.

11. Procédé selon l'une quelconque des revendications précédentes, où la préparation de la solution comprend l'ajustement du pH de la solution dans la plage allant de 8 à 12.

12. Procédé selon l'une quelconque des revendications précédentes, où l'acide organique est un acide phosphonique ou sulfonique.

13. Procédé selon l'une quelconque des revendications précédentes, où la solution comprend un composé contenant du silicium, notamment un composé contenant du silicium choisi parmi le groupe consistant en le gamma-aminopropyltriéthoxysilane, le gamma-glycidoxypropyltriméthoxysilane, l'aminoéthylaminopropyltriméthoxysilane, le n-propylaminosilane et leurs mélanges.
